# EUROPEAN PATENT APPLICATION

(11) **EP 1 538 347 A1**
(43) Date of publication of application: **08.06.2005**
(21) Application number: 04105574.0
(22) Date of filing: 08.11.2004
(51) Int. Cl.: F16B 13/06, F16B 13/12, F16B 13/02

(54) **Expanding anchoring device and relative method of production**

(30) Priority: 12.11.2003 IT UD20030224
(71) Applicant: FRIULSIDER SpA, 33048 S. GIOVANNI AL NATISONE (UD) (IT)
(72) Inventor: Villa, Gino, I-20044 Bernareggio (MI) (IT)
(74) Representative: Petraz, Gilberto Luigi

(57) **Abstract**

Expanding anchoring device (10) and relative method of production. The anchoring device (10) is attached to a wall (15) and comprises a tubular body (11) provided with a plurality of deformable elements (19), and a spreader element (12) which is arranged inside the tubular body (11) and moved axially in order to determine the elastic deformation of the deformable elements (19). Each deformable element (19) is made in a piece from the tubular body (11) and comprises, at one end, stopping teeth (25) which prevent the spreader element (12) making an axial movement towards the outside of the tubular body (11).

## Description

### FIELD OF THE INVENTION

The present invention concerns an expanding anchoring device, able to be made solid with a wall in order to retain with respect to the latter a structure to be anchored, by means of an attachment element such as for example a screw, a pin, a tie bar or suchlike. To be more exact, the present invention concerns an anchoring device able to be inserted inside a hole made in a wall and comprising a tubular body provided with elastically deformable elements and with a spreader element, shaped like a truncated cone, and to which the attachment element is connected. The spreader element is able to be moved axially with respect to the tubular body in order to elastically deform its deformable elements, so that, expanding towards the outside of the tubular body, they achieve the anchorage inside the hole made in the wall.

### BACKGROUND OF THE INVENTION

Various anchoring devices or blocks of the expanding type are known, made either of plastic material or of metal, and able to be used to make anchorings on walls, by means of an attachment element, such as for example a screw, a pin, or suchlike, which, in turn, attaches the structure to be anchored to the wall itself.

Some known anchoring devices consist of a tubular body on which some deformable metal elements are made, connected to each other by means of a connecting annular ring nut, and of a spreader element shaped like a truncated cone, arranged inside the tubular body and screwed to a threaded end of the attachment element, so that screwing the tubular body causes the deformable elements to expand against the inner surface of a hole into which the anchoring device is able to be inserted.

Anchoring devices are also known with a tubular body consisting of the association of several (normally two, three or four) deformable elements, independent of each other and held together by a connection element.

One of the main disadvantages of known anchoring devices is that the spreader element is not constrained, or is constrained insecurely, to the tubular body, so that it can easily move axially towards the outside of the tubular body, easily emerging and becoming detached therefrom, or, on the contrary, it can penetrate inside the tubular body already during the step when it is inserted into the hole on the wall, thus compromising the anchoring operation.

These disadvantages can entail the possibility of the spreader element accidentally coming out of the tubular body, or the risk that it does not perform an optimum action of deformation on the tubular body, thus causing problems of gripping of the anchorage to the wall.

Another disadvantage of known anchoring devices is that they consist of many components, such as the deformable elements, the annular ring nut, the possible connection element and the spreader element, so that the costs to produce and assemble them are rather high.

One purpose of the present invention is to achieve an expanding anchoring device that prevents the spreader element from accidentally coming out of the tubular body, or penetrating inside the tubular body too early, and that guarantees the correct axial positioning of the spreader element with respect to the tubular body, so as to improve the grip of the anchorage on the wall.

Another purpose of the present invention is to perfect a method to produce an anchoring device which will normally allow to reduce the costs of production.

Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the present invention or variants to the main inventive idea.

In accordance with this purpose, an expanding anchoring device according to the present invention is able to be used to perform anchorages to a wall and comprises a tubular body provided with a plurality of deformable elements and a spreader element able to be arranged axially mobile inside the tubular body, in order to determine the elastic deformation of the deformable elements.

According to a characteristic feature of the present invention, each of the deformable elements is made from the tubular body, constituting a single solid and integral piece therewith, and comprises, at one end, stopping means that prevent the spreader element from making an axial movement towards the outside of the tubular body.

In a first form of preferential embodiment, the spreader element comprises a plurality of housing seatings made on its outer surface, each of which is able to cooperate with a terminal part of each of the deformable elements, in order to prevent the reciprocal rotation of the spreader element and the tubular body.

Thanks to the presence of the stopping means and the housing seatings, the anchoring device according to the present invention allows the spreader element to make only an axial movement towards the inside, which can occur only by acting on the attachment element after the anchoring device has been inserted into the hole made on the wall, and to be correctly positioned with respect to the tubular body, which therefore guarantees optimum spreading action of the spreader element on the deformable elements, with a consequent optimum anchorage of the device to the wall.

Advantageously the spreader element axially includes a threaded through hole with which a screw element or other threaded attachment element is coupled; by tightening this, the spreader element is moved axially inside the tubular body so as to cause the elastic deformation of the deformable elements.

The method to produce the anchoring device according to the present invention comprises a shearing step wherein, starting from a plane sheet or strip of metal material, at least a shaped plate is made by means of shearing, including a plurality of deformable elements; a coining step wherein each of the deformable elements is reduced in thickness at least in correspondence with a terminal segment thereof, in order to define a determinate taper in an intermediate segment, and wherein the stopping means are made; and a bending step wherein the plate is bent back upon itself in order to define the shape of the tubular body.

This production method also comprises a turning step wherein, starting from a block of metal material, the spreader element is made by means of turning; and a milling step wherein, on the outer surface of the spreader element, the housing seatings are milled.

According to a variant, the spreader element can advantageously be made by means of cold molding, thus eliminating the turning and milling steps, and considerably reducing the costs of production.

With the production method according to the present invention it is possible to achieve an anchoring device with only two components, that is, the plane sheet of metal material to make the tubular body including the deformable elements, and the metal block to make the spreader element.

In this way, the times needed for production and assembly are considerably reduced.

### BRIEF DESCRIPTION OF THE DRAWINGS

These and other characteristics of the present invention will become apparent from the following description of a preferential form of embodiment, given as a non-restrictive example with reference to the attached drawings wherein:
- - fig. 1: is a longitudinal section of an anchoring device according to the present invention;
- - fig. 2: shows an enlarged detail of the anchoring device in fig. 1;
- - fig. 3: shows a first applicative solution of the anchoring device in fig. 1;
- - fig. 4: shows a second applicative solution of the anchoring device in fig. 1;
- - fig. 5: is a plane view of a first step of the method to produce the anchoring device in fig. 1;
- - fig. 6: is a lateral view of a second step of the method to produce the anchoring device in fig. 1;
- - fig. 7: is a view from above of a third step of the method to produce the anchoring device in fig. 1;
- - fig. 8: is a three-dimensional view of a fourth step of the method to produce the anchoring device in fig. 1;
- - fig. 9: is a three-dimensional view of a fifth step of the method to produce the anchoring device in fig. 1;
- - fig. 10: is a three-dimensional view of a sixth step of the method to produce the anchoring device in fig. 1.

### DETAILED DESCRIPTION OF A PREFERENTIAL FORM OF EMBODIMENT

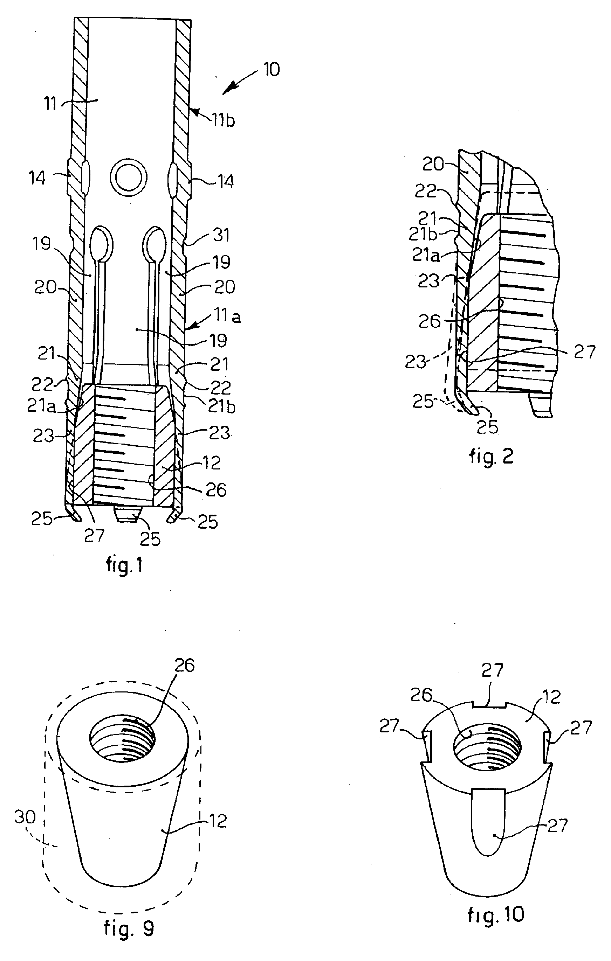

With reference to fig. 1, an expanding anchoring device 10 according to the present invention comprises a tubular body 11 and a spreader element 12 inserted inside the tubular body 11 and axially mobile with respect to the latter.

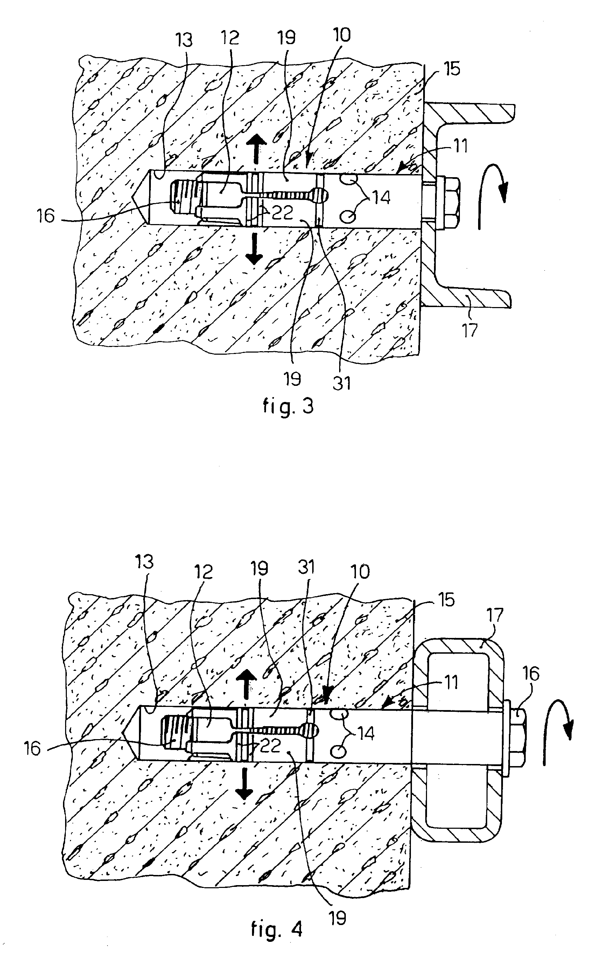

As shown in figs. 3 and 4, the anchoring device 10 according to the invention is able to be inserted preferentially inside a blind hole 13 made in a wall 15, for example made of concrete, and is able to allow to attach a structural element 17, in this case two different types of profiled bars, to the wall 15 by means of a screw 16 screwed to the spreader element 12 and passing through the tubular body 11.

From these figures it is also clear that the anchoring device 10 according to the present invention can be applied irrespectively both in anchorage systems of the non-through type (fig. 3), wherein the tubular body 11 is in contact with the structural element 17 to be attached, and also in anchorage systems of the through type (fig. 4), wherein a spacer 18 is arranged between the tubular body 11 and the head of the screw 16 which facilitates the application thereof.

The tubular body 11 comprises a front part 11a (figs. 1 and 2), able to be arranged in correspondence with the inner segment of the blind hole 13, and a rear part 11b, able to be arranged in correspondence with the outer segment of the blind hole 13.

The front part 11a and the rear part 11b are made in a single piece, and in particular the front part 11a comprises a plurality of deformable petals or screens 19, in this case four, separated from each other.

In this case, the rear part 11b comprises a plurality of anti-rotation bosses or ridges 14, made by means of semi-shearing on its outer circular surface and able to cooperate with the inner wall of the blind hole 13 in order to prevent the tubular body 11 from rotating around its own axis due to the effect of the rotation caused by the screwing of the screw 16.

Each of the deformable petals 19 comprises a first segment 20, an intermediate segment 21 and a terminal segment 23, arranged one after the other.

The first segment 20 is connected to the rear part 11b and has a thickness substantially equivalent to the latter.

The terminal segment 23 has a reduced thickness with respect to the first segment 20 and has a reduced width with respect to that of the first segment 20 and the intermediate segment 21 and, according to a characteristic feature of the present invention, has a stopping tooth 25 at one end, bent towards the inside and able to retain the spreader element 12 in cooperation with the tubular body 11, preventing it from making an axial movement towards the outside.

The intermediate segment 21 has a tapered circular inner surface 21a and has a thickness, defining a determinate taper, that varies from that of the first segment 20 to that of the terminal segment 23. The intermediate segment 21 also comprises an outer surface 21b including a plurality of circumferential retaining elements 22, which improve, in use, the anchorage of the device 10 to the inner surface of the blind hole 13.

At the base of the deformable petals 19, at the point where these petals 19 join the rear part 11b of the tubular body 11, a circumferential groove 31 is made by means of coining, which reduces at that point the section of the metal on the entire circumference of the tubular body 11, generating an area of lesser resistance or preferential yielding, and which facilitates the controlled deformation of the petals 19.

The spreader element 12 has a truncated cone structure and has a through threaded axial hole 26, inside which the screw 16 is able to be screwed, and is able to be arranged inside the four deformable petals 19, in correspondence with the terminal 23 and intermediate 21 segments, so that when the screw 16 is screwed inside the threaded hole 26 this determines an axial movement of the spreader element 12 towards the inside of the tubular body 11. Due to the conical form of the spreader element 12 and the taper of the inner surface 21a of the intermediate segment 21, this axial movement entails an elastic deformation towards the outside of the petals 19 which, in this way, by means of the elements 22, are anchored to the inner surface of the blind hole 13.

The elastic deformation of the petals 19 is also piloted correctly by the presence at the base of the petals 19 of the preferential yielding point determined by the groove 31.

The spreader element 12 also comprises four housing seatings 27, made on the outer surface thereof and having a size substantially mating with that of the terminal segments 23 of each petal 19.

In this way, the coupling of the terminal segments 23 and the respective housing seatings 27 prevents the coaxial rotation of the spreader element 12 with respect to the tubular body 11, and also correctly positions the spreader element 12 and the tubular body 11 with respect to each other, so that the spreading action on the petals 19 is symmetrical and effective and in this way an optimum anchorage of the device 10 to the wall 15 is guaranteed.

The anchoring device 10 as described heretofore is made with the following method.

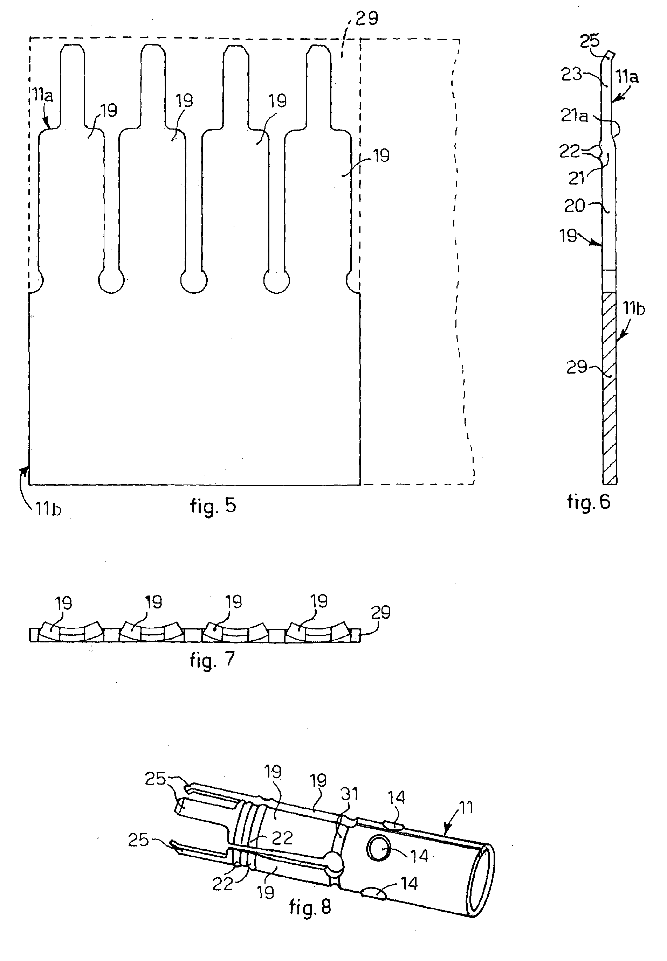

Starting from a sheet, or strip, of steel or other metal, substantially plane, for example arriving from a coil, this is sheared into plates 29 (fig. 5) of a length equal to the development of the circumference of the tubular body 11. The plates 29 are also shaped, during the same shearing operation, in order to define the deformable petals 19, so that these are made in a single piece with respect to the tubular body 11.

In a second step, a coining operation is performed (fig. 6) to coin the deformable petals 19 made previously, that is, the thickness of the plate 29 is reduced in correspondence with the front part 11a, thus defining the thickness of the terminal segment 23 and the taper of the intermediate segment 21. During this step, the ends of the terminal segments 23 are also bent, so as to form the respective stopping teeth 25. At the same time, the anti-rotation bosses 14 are made by means of semi-shearing, and also the circumferential groove 31.

Subsequently a third step is made (fig. 7), wherein each of the deformable petals 19 is shaped so that its transverse section substantially defines an arc of a circumference with a radius equal to that of the tubular body 11.

Finally, a fourth bending step is performed (fig. 8), wherein the plate 29 is bent back upon itself in order to define the form of the tubular body 11.

Separate from said steps to make the tubular body 11, a fifth turning step (fig. 9) and a sixth milling step (fig. 10) are also performed in order to obtain the spreader element 12.

The fifth step (fig. 9) provides that, starting from a cylindrical block 30 of metal material, shown by a line of dashes, the spreader element 12 is made by means of turning with the relative threaded central hole 26.

The sixth step (fig. 10) provides that, on the outer surface of the spreader element 12, the housing seatings 27 are made.

Alternatively, the fifth and sixth steps (figs. 9 and 10) can advantageously be performed simultaneously using the technique of cold molding, which replaces both steps of turning and milling.

The tubular body 11 and the spreader element 12 thus made are then assembled by means of simple axial pressure of the second inside the first, overcoming the elastic resistance given by the deformable petals 19.

In this way, the spreader element 12 is arranged inside the tubular body 11 and is retained in correspondence with the petals 19, on one side, by the taper of the circular inner surface 21a of the intermediate segment 21 and, on the other side, by the stopping teeth 25.

Moreover, the cooperation between the housing seatings 27 and the terminal segments 23 of the petals 19 determines a correct radial and axial positioning of the spreader element 12 with respect to the tubular body 11, thus guaranteeing an optimum anchorage of the device 10 inside the blind hole 13, and hence to the wall 15.

It is clear, however, that modifications and/or additions of parts or steps may be made to the anchoring device 10 and its method of production as described heretofore, without departing from the field and scope of the present invention.

For example, the spreader element 12 can have a substantially cylindrical shape and cooperate, with one of its edges, with the taper of the circular inner surface 21a of the intermediate segment 21 in order to cause the spreading of the petals 19.

It is also clear that, although the invention has been described with reference to specific examples, a person of skill in the art shall certainly be able to achieve many other equivalent forms of expanding anchoring device, and relative method, all of which shall come within the field and scope of the invention.

## Claims

1. Expanding anchoring device able to be fixed to a wall (15) and comprising a tubular body (11) provided with a plurality of deformable elements (19), and a spreader element (12) able to be arranged inside said tubular body (11) and moved axially in order to determine the elastic deformation of said deformable elements (19), **characterized in that** each of said deformable elements (19) is made in a piece from said tubular body (11) and comprises, at one end thereof, stopping means (25) able to prevent an axial movement of said spreader element (12) towards the outside of said tubular body (11).

2. Expanding anchoring device as in claim 1, **characterized in that** said spreader element (12) comprises a plurality of housing seatings (27) made in its outer surface in a number corresponding to that of said deformable elements (19), and **in that** each of said housing seatings (27) is able to cooperate with a terminal segment (23) of each of said deformable elements (19) in order to prevent the reciprocal rotation of said spreader element (12) and said tubular body (11).

3. Expanding anchoring device as in claim 1 or 2, wherein at least a screw element (16) is provided to pass through said tubular body (11), **characterized in that** said spreader element (12) is shaped like a truncated cone and comprises a threaded axial hole (26) into which said screw element (16) is able to be screwed in order to cause the axial movement of said spreader element (12) towards the inside of said tubular body (11).

4. Expanding anchoring device as in any claim hereinbefore, **characterized in that** said spreader element (12) has a substantially cylindrical shape.

5. Expanding anchoring device as in claim 1, **characterized in that** each of said deformable elements (19) comprises a first segment (20) with a thickness substantially equal to that of said tubular body (11), a terminal segment (23), with a reduced thickness with respect to that of said first segment (20), and an intermediate segment (21) with a tapered circular inner surface (21a) and with a thickness varying from that of said first segment (20) to that of said terminal segment (23).

6. Expanding anchoring device as in claim 5, **characterized in that** said terminal segment (23) has a reduced width with respect to that of said first segment (20), and has one end bent so as to form one of said stopping means (25).

7. Expanding anchoring device as in claim 1, **characterized in that**, for each of said deformable elements (19), said stopping means comprise a tooth (25) bent towards the inside of said tubular body (11), and able to retain said spreader element (12) inside said tubular body (11).

8. Expanding anchoring device as in claim 5, **characterized in that** said intermediate segment (21) comprises on an outer surface (21b) thereof a plurality of retaining circumferential elements (22), able to improve the anchoring conditions of said anchoring device (10) when said anchoring device (10) is inserted into a corresponding hole (13) of said wall (15).

9. Expanding anchoring device as in claim 8, **characterized in that** said tubular body (11) comprises a plurality of bosses (14) made in a piece on a circular outer surface thereof, and able to cooperate with an inner surface of said hole (13), in order to prevent the accidental rotation of said tubular body (11) around its own axis.

10. Expanding anchoring device as in claim 5, **characterized in that** it comprises a circumferential groove (31) made in said tubular body (11), and able to define a zone of preferential yielding for the elastic deformation of each of said deformable elements (19).

11. Method to produce an expanding anchoring device able to be fixed to a wall (15) and comprising a tubular body (11) provided with a plurality of deformable elements (19) and a spreader element (12) able to be arranged inside said tubular body (11) and moved axially in order to determine the elastic deformation of said deformable elements (19), **characterized in that** it comprises a shearing step wherein, starting from a plane sheet of metal material, a shaped plate (29) is made by means of shearing, wherein said shaped plate (29) includes said plurality of deformable elements (19); a coining step wherein each of said deformable elements (19) is reduced in thickness at least in correspondence with a terminal segment (23) thereof, in order to define a determinate taper, and wherein stopping means (25) are made for retaining, in use, said spreader element (12) inside said tubular body (11); and a bending step wherein said plate (29) is bent back on itself in order to define the form of said tubular body (11).

12. Method as in claim 11, **characterized in that** between said coining step and said bending step a shaping step is provided wherein each of said deformable elements (19) is shaped, so that its transverse section substantially defines an arc of a circumference having a radius substantially equal to that of said tubular body (11).

13. Method as in claim 11 or 12, **characterized in that** it further comprises a turning step wherein, starting from a block (30) of metal material, said spreader element (12) is made by means of turning; and a milling step wherein on the outer surface of said spreader element (12) a plurality of housing seatings (27) are made, corresponding in number to that of said deformable elements (19), each able to cooperate with a terminal segment (23) of a corresponding deformable element (19), in order to prevent the reciprocal rotation of said spreader element (12) and said tubular body (11).

14. Method as in claim 11 or 12, **characterized in that** said spreader element (12) is made in a molding step with the cold molding technique.

15. Method as in claim 13 and 14, **characterized in that** said spreader element (12) is made so that its outer surface is shaped substantially like a truncated cone.

16. Method as in claim 13, **characterized in that**, during said turning step, a threaded through hole (26) is made coaxial with said spreader element (12), wherein a screw element (16) is able to be screwed.

17. Method as in claim 14, **characterized in that**, during said molding step, a threaded through hole (26) is made coaxial with said spreader element (12), wherein a screw element (16) is able to be screwed.
